# EUROPÄISCHE PATENTSCHRIFT

(11) **EP 2 690 283 B1**
(45) Veröffentlichungstag und Bekanntmachung des Hinweises auf die Patenterteilung: **26.12.2018**
(21) Anmeldenummer: 13450033.9
(22) Anmeldetag: 25.07.2013
(51) Int. Cl.: F03B 17/02

(54) **Antriebseinrichtung zum Antreiben eines Generators**
Drive device for driving a generator
Dispositif d'entraînement pour l'entraînement d'un générateur

(30) Priorität: 26.07.2012 AT 8342012
(43) Veröffentlichungstag der Anmeldung: 29.01.2014
(73) Patentinhaber: Piotrowski, Maksym, 1150 Wien (AT)
(72) Erfinder: Piotrowski, Maksym, 1150 Wien (AT)
(74) Vertreter: Keschmann, Marc

(56) Entgegenhaltungen:
- EP-A2- 0 931 930
- US-A- 3 806 733
- US-A1- 2006 000 210
- US-A1- 2006 017 292

## Beschreibung

Die Erfindung betrifft eine Antriebseinrichtung zum Antreiben eines Generators, umfassend zumindest einen Auffangbehälter zum Auffangen eines gasförmigen Mediums in einem flüssigen Medium, wobei der Auffangbehälter durch den archimedischen Auftrieb angetrieben entlang Führungsmitteln in dem flüssigen Medium von einer abgesenkten Position in eine aufgestiegene Position linear verschiebbar angeordnet ist, und Kraftübertragungsmittel, die zum Übertragen der linearen Bewegung des Auffangbehälters entlang der Führungsmittel in eine rotatorische Bewegung einer Antriebswelle zum Antreiben des Generators ausgebildet sind, wobei erste Haltemittel vorgesehen sind, die zum Halten des Auffangbehälters in seiner abgesenkten Position mit einer Haltekraft ausgebildet sind, und wobei Füllmittel vorgesehen sind, die zum Füllen des in seiner abgesenkten Position befindlichen Auffangbehälters mit dem gasförmigen Medium ausgebildet sind, wobei der Auffangbehälter, wenn die Haltekraft geringer als der archimedischen Auftrieb ist, von seiner abgesenkten in seine aufgestiegene Position übergeht, und wobei Ablassmittel vorgesehen sind, die zum Ablassen des gasförmigen Mediums aus dem in seiner aufgestiegenen Position befindlichen Auffangbehälter vorgesehen sind, worauf der Auffangbehälter von seiner aufgestiegenen in seine abgesenkte Position übergeht.

Eine derartige Antriebseinrichtung ist der US 6,964,165 B2 oder der EP 0, 931, 930 A2 zu entnehmen.

Es sind eine Vielzahl unterschiedlicher Antriebseinrichtungen für Generatoren bekannt. Als Antriebseinrichtung kann beispielsweise eine Windkraftturbine, eine Wasserkraftturbine oder eine Gezeitenkraftturbine dienen. Diesen Antriebseinrichtungen ist gemeinsam, dass eine Naturkraft dazu ausgenutzt wird eine Antriebswelle eines Generators mechanisch anzutreiben. Mit dem Generator kann dann Strom erzeugt werden. Da der Strom aber insbesondere zu Spitzenbedarfszeiten benötigt wird, muss er teilweise in Akkumulatoren zwischengespeichert werden. Dies ist nicht sehr effektiv, da nur ein Teil der gespeicherten elektrischen Energie von den Akkumulatoren wieder abgebbar ist.

Bei der in der US 6,964,165 B2 beschriebenen Antriebseinrichtung wird Druckluft in effizienter Weise zum Antreiben eines Generators genutzt, indem ein im Wasser verkehrt angebrachter Auffangbehälter mit Luft gefüllt wird. Der Auffangbehälter wird auf Grund des archimedischen Auftriebs in Richtung Wasseroberfläche befördert. Diese Auftriebskraft wird dazu genutzt die Antriebswelle des Generators anzutreiben. Wenn der Auffangbehälter an seiner aufgestiegenen Position angekommen ist, dann wird ein Ventil geöffnet und die Luft kann aus dem Auffangbehälter entweichen, worauf der Auffangbehälter auf Grund seines Gewichts in seine abgesenkte Position absinkt. In der abgesenkten Position wird der Auffangbehälter neuerlich mit Druckluft gefüllt, um die Antriebswelle beim Aufsteigen des Auffangbehälters neuerlich anzutreiben. Da Druckluft in Druckluftspeichern sehr effizient gespeichert werden kann, ist dadurch der Vorteil erhalten, dass die Antriebseinrichtung zum Antreiben des Generators und zum Erzeugen von Strom erst dann in Betrieb gesetzt wird, wenn ein akuter Bedarf an Strom besteht. Die Antriebseinrichtung eignet sich daher besonders gut, um Spitzenlasten des Energieversorgungsnetzes abzufedern.

Nachteilig bei der beschriebenen Antriebseinrichtung ist, dass die Zufuhr der Druckluft und das Ablassen der Luft gesondert anzusteuernde Ventile erfordert, sodass der schaltungstechnische Aufwand und damit verbunden die Fehleranfälligkeit hoch sind.

Die vorliegende Erfindung zielt daher darauf ab, eine einfache und zuverlässige Konstruktion zu schaffen, bei der auf eine gesonderte Ansteuerung von Ventilen verzichtet werden kann.

Zur Lösung dieser Aufgabe ist die Antriebseinrichtung der eingangs genannten Art derart weitergebildet, dass die Führungsmittel wenigstens ein den Auffangbehälter durchsetzendes Rohr umfassen, welches mit einer Quelle des gasförmigen Mediums und/oder einer Ablassleitung für das gasförmige Medium verbindbar ist, und dass die Füllmittel und/oder die Ablassmittel wenigstens eine in dem Rohr ausgebildete, in den Auffangbehälter in der abgesenkten Position mündende Öffnung bzw. wenigstens eine in dem Rohr ausgebildete, in den Auffangbehälter in der aufgestiegenen Position mündende Öffnung umfasst. Der Auffangbehälter ist somit an dem den Behälter durchsetzenden Rohr in Verschieberichtung des Behälters geführt, wobei das Rohr gleichzeitig die Zu- und/oder Ableitung des gasförmigen Mediums erlaubt, wobei der Auffangbehälter in der abgesenkten Position über die entsprechende Öffnung beispielsweise mit Druckluft gefüllt und in der aufgestiegenen Position über die entsprechende Öffnung entleert werden kann.

Eine besonders vorteilhafte Weiterbildung sieht hierbei vor, dass die Öffnung jeweils von einer in Verschieberichtung des Auffangbehälters verstellbaren Abdeckung übergriffen ist, die mit einem am Auffangbehälter ausgebildeten Anschlag zusammenwirkt, um bei Erreichen der abgesenkten Position bzw. bei Erreichen der aufgestiegenen Position die jeweilige Öffnung freizugeben. Damit wird ein automatisches Öffnen der Öffnung erreicht, sobald der Auffangbehälter die abgesenkte bzw. aufgestiegene Position erreicht und ein automatisches Schließen der Öffnung erreicht, sobald der Auffangbehälter die jeweilige Position verlässt. Das selbständige Schließen der Öffnung wird bevorzugt dadurch unterstützt, dass die verstellbare Abdeckung von einer im Schließsinne wirkenden Feder beaufschlagt ist. Bevorzugt ist die Abdeckung von einer das Rohr dichtend umgebenden Hülse gebildet.

Um den Auffangbehälter in der abgesunkenen Position zuverlässig zu halten, ist bevorzugt vorgesehen, dass die ersten Haltemittel wenigstens einen Permanentmagneten umfassen. Wenn, wie dies einer bevorzugten Ausbildung entspricht, der Auffangbehälter von einer unten offenen Kammer gebildet ist, können die ersten Haltemittel hierbei wenigstens einen ersten Permanentmagneten im Gehäuse und wenigstens ein metallisches Gegenstück am Auffangbehälter umfassen, wobei die Haltekraft durch die magnetische Kraft des Permanentmagneten bestimmt ist. Der Auffangbehälter beginnt von seiner abgesenkten in seine aufgestiegene Position überzugehen, sobald die von dem Permanentmagneten ausgeübte Haltekraft geringer ist als der archimedische Auftrieb. Alternativ kann an Stelle eines Permanentmagneten ein Elektromagnet zum Einsatz gelangen, der zwar einen Energieverbrauch verursacht, dessen Haltekraft aber an die jeweiligen Bedürfnisse angepasst werden kann und mit dem bei Abschaltung der elektrischen Energieversorgung eine gezielte Initiierung des Aufstiegsvorganges möglich ist.

Zusätzlich können bevorzugt zweite Haltemittel vorgesehen sein, die zum Halten des Auffangbehälters in seiner aufgestiegenen Position ausgebildet sind. Die zweiten Haltemittel umfassen bevorzugt wenigstens einen Elektromagneten, der mit einem metallischen Gegenstück am Auffangbehälter zusammenwirkt. Damit wird erreicht, dass das Halten der aufgestiegenen Position unabhängig ist von dem jeweils herrschenden archimedischen Auftrieb. Ohne die Haltemittel würde das Absinken des Auffangbehälters bereits beginnen, wenn der archimedische Auftrieb geringer ist als die Gewichtskraft des Auffangbehälters.

Die Übertragung der Kraft von der linearen Bewegung des Auffangbehälters entlang der Führungsmittel in eine rotatorische Bewegung der Antriebswelle soll mit Vorteil mit Hilfe von Kraftübertragungsmitteln erfolgen, die möglichst verschleißfest und wartungsarm sind und mit minimalen Reibungsverlusten arbeiten. Die Kraftübertragungsmittel sind in diesem Zusammenhang bevorzugt durch eine Kurbel gebildet, die einerseits unter Zwischenschaltung eines Freilaufs an der Welle angreift und andererseits in Verschieberichtung des Auffangbehälters mit diesem zusammenwirkt. Der Freilauf stellt sicher, dass die Kurbel nur dann mit der Welle drehfest zusammenwirkt, wenn der Auffangbehälter einen Hub von der abgesunkenen in die aufgestiegene Position durchführt. Mit der Kurbel wird ein entsprechender Hebel verwirklicht, sodass eine besonders wirksame Kraftübertragung sichergestellt ist.

Zur Erhöhung der Antriebsleistung können bei der erfindungsgemäßen Antriebseinrichtung ohne weiteres mehrere parallele Systeme jeweils bestehend aus einem Auffangbehälter zum Einsatz gelangen. Die Erfindung ist in diesem Fall bevorzugt derart weitergebildet, dass die Antriebseinrichtung wenigstens zwei Antriebsmodule aufweist, die je durch einen Auffangbehälter, Führungsmittel, erste Haltemittel, Füllmittel, Ablassmittel und Kraftübertragungsmittel von dem Auffangbehälter des Antriebsmoduls auf die Antriebswelle der Antriebseinrichtung gebildet sind. Die zwei Antriebsmodule sind bevorzugt angeordnet und ausgebildet, um abwechselnd eine Aufwärtsbewegung durchzuführen.

Besonders vorteilhaft ist weiters die Antriebseinrichtung als Teil einer Windkraftanlage zu verwenden. Mit einem Windrotor wird eine Druckluftpumpe bzw. ein Kompressor mechanisch angetrieben, mit der Druckluft entweder direkt in den Auffangbehälter oder zur Speicherung in den Druckluftspeicher gepumpt wird. Mit diesem Windkraftgenerator ist eine völlig autarke Energieversorgung eines abgelegenen Hauses oder Betriebs durchführbar.

Weitere vorteilhafte Ausgestaltungen des erfindungsgemäßen Systems werden im Folgenden anhand der Figuren näher erläutert.
- Fig. 1: zeigt ein Anlagenschema einer Anlage zur Umwandlung von Windenergie in elektrische Energie,
- Fig. 2: zeigt in einer Schnittansicht gemäß der Linie II-II der Fig. 3 eine Antriebseinrichtung zum Antreiben eines Generators mittels Druckluft,
- Fig. 3: zeigt eine Seitenansicht der Antriebseinrichtung gemäß Fig. 2,
- Fig. 4: zeigt eine Draufsicht der Antriebseinrichtung gemäß Fig. 3 und
- Fig. 5: zeigt eine Detailansicht der Kraftübertragungsmittel.

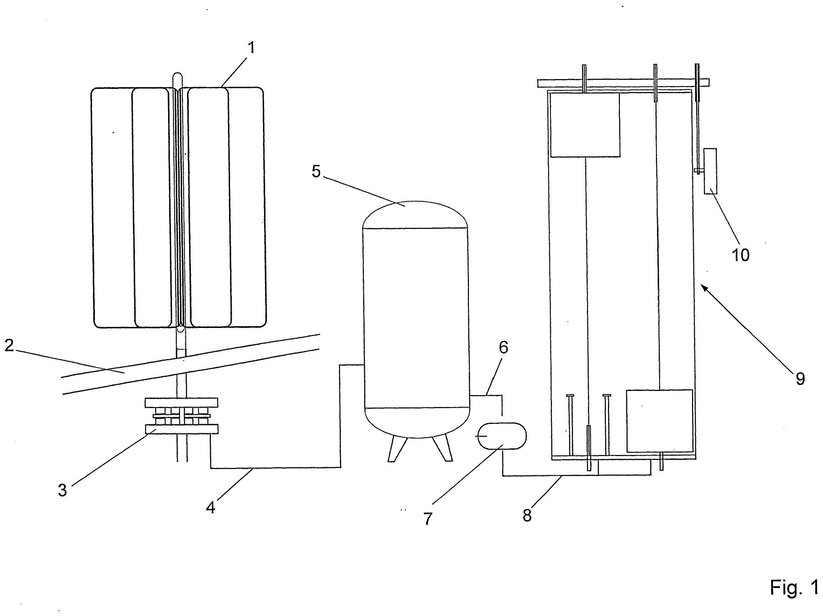

Fig. 1 zeigt eine Anlage zur Umwandlung von Windenergie in elektrische Energie. Die Anlage umfasst einen auf einer Dachfläche 2 montierten Windrotor 1 für den Antrieb einer Druckluftpumpe 3, die zur Kompression der Umgebungsluft dient. Über eine Leitung 4 wird die erzeugte Druckluft einem Druckluftspeicher 5 zugeführt, in dem die Druckluft gespeichert wird. Der Druckluftspeicher 5 ist über eine Leitung 6, ein Dosiergerät 7. sowie eine weitere Leitung 8 an die Antriebseinrichtung 9 gekoppelt. Über das Dosiergerät 7 wird der Antriebseinrichtung 9 Druckluft zugeführt. Die Antriebseinrichtung 9 ist mechanisch mit einem Generator 10 verbunden, der die rotatorische Bewegung in elektrische Energie umsetzt.

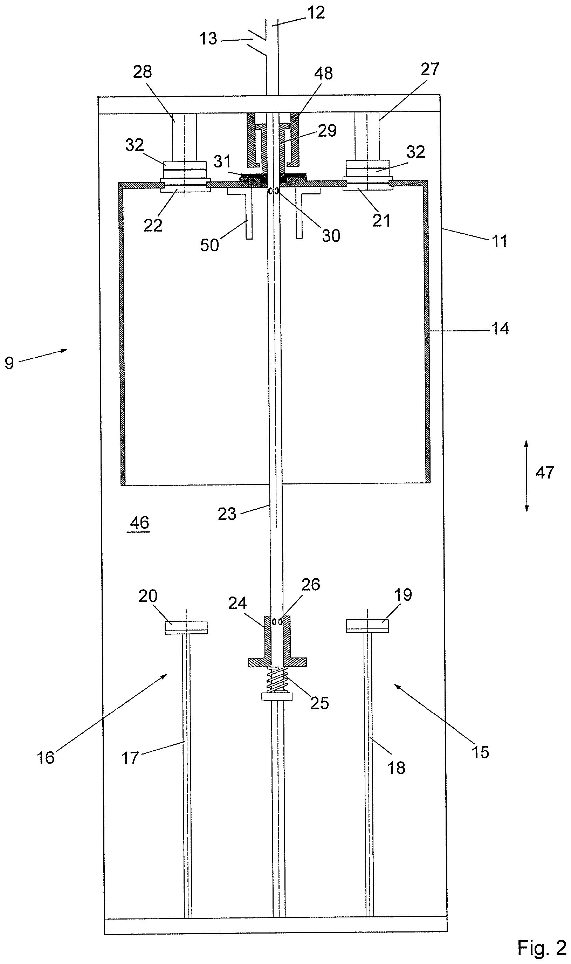

Fig. 2 zeigt die erfindungsgemäße Ausbildung der Antriebseinrichtung im Querschnitt. Die Antriebseinrichtung 9 weist ein Gehäuse 11 auf, das mit einem Einlass 12 sowie einem Auslass 13 für das Zu- und Ableitungsrohr 23 ausgeführt ist. Der Einlass 12 und der Auslass 13 sind jeweils mit einem Absperrventil ausgestattet, um je nach Bedarf entweder Druckluft in das Zu- und Ableitungsrohr 23 einzuspeisen oder Luft aus dem Zu- und Ableitungsrohr 23 abzulassen. Im Inneren des mit einer Flüssigkeit 46, insbesondere Wasser gefüllten Gehäuses 11 ist der nach unten geöffnete Auffangbehälter 14 entlang des Zu- und Ableitungsrohrs 23 in Richtung des Doppelpfeils 47 geführt. Am Boden der Antriebseinrichtung 9 befinden sich zwei auf Stempeln 17 und 18 befestigte und jeweils wenigstens einen Permanentmagneten 19, 20 umfassende ersten Haltemittel 15, 16. In der abgesunkenen Position wirken die Permanentmagnete 19, 20 mit an der Oberseite montierten Eisenkörpern oder Permanentmagneten 21, 22 zusammen, um den Auffangbehälter 14 zu halten und ein vorzeitiges Aufsteigen auf Grund des archimedischen Auftriebs zu verhindern.

Beim Absinken des Auffangbehälters 14 in die abgesunkene Position wird über einen mit dem Boden des Auffangbehälters 14 verbundenen Anschlag 50 eine Abdeckhülse 24 des den Auffangbehälter 14 durchsetzenden Zu- und Ableitungsrohrs 23 entgegen einer im Schließsinne wirkenden Feder 25 verschoben und die Öffnungen 26 freigegeben. Dadurch kann Druckluft durch die Öffnungen 26 in den Auffangbehälter 14 einströmen. Wenn der archimedische Auftrieb das Gewicht des Auffangbehälters 14 und die Haltekraft der ersten Haltemittel 15, 16 übersteigt, löst sich der Auffangbehälter 14 und steigt rasch und kraftvoll auf, wobei er unter anderem entlang des den Auffangbehälter 14 durchsetzenden Zu- und Ableitungsrohrs 23 geführt wird. In Fig. 2 ist der Auffangbehälter 14 in der oberen Endstellung, d.h. der aufgestiegenen Position dargestellt. Sobald der Auffangbehälter 14 die aufgestiegene Position erreicht hat, gibt er am oberen Ende wiederum eine die Öffnungen 30 des Zu- und Ableitungsrohrs 23 übergreifende Abdeckhülse 29 frei, um die im Auffangbehälter 14 aufgefangene Druckluft über die Öffnungen 30 und den Auslass 13 entweichen zu lassen. Eine Dichtung 31 verhindert dabei den Austritt von Druckluft in das umgebende flüssige Medium 46. Gehalten wird der Auffangbehälter 14 in der aufgestiegenen Position von auf Stempeln 27, 28 montierten zweiten Haltemitteln 32 in Form von Elektromagneten. Beim Verlassen der aufgestiegenen Position auf Grund der Schwerkraft des Auffangbehälters 14 wird die Abdeckhülse 24 auf Grund der Schwerkraft selbständig in ihre Ausgangsposition zurückverschoben, um die Öffnungen 30 wieder zu verschließen. Rückhaltemittel 48 mit einen vorspringenden Teller der Abdeckhülse 29 hintergreifenden Fortsätzen halten die Abdeckhülse 29 in der die Öffnungen 30 verschließenden Stellung.

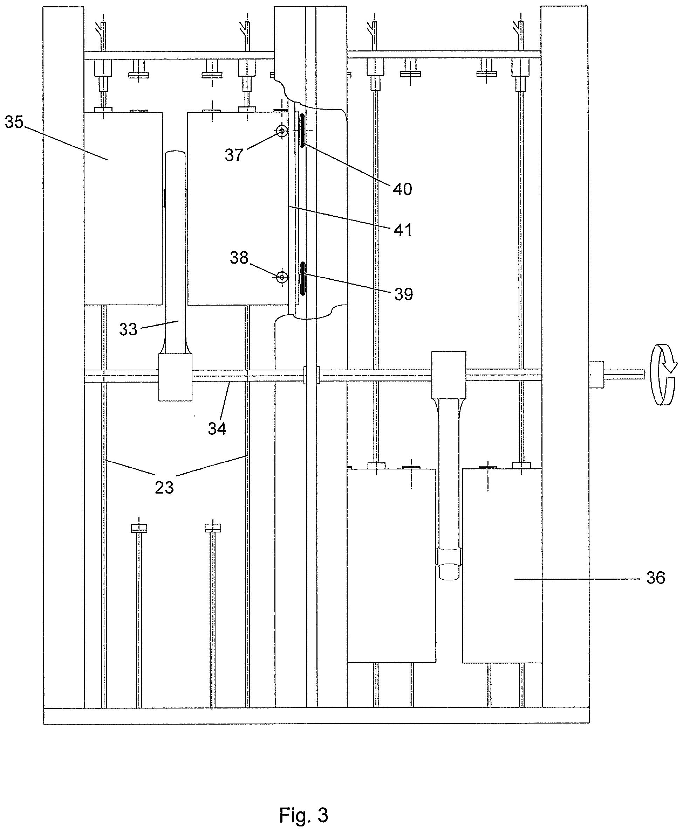

Fig. 3 zeigt eine Darstellung einer Mehrfachausführung der Antriebseinrichtung 9. Die Kraftübertragungsmittel 33 zur Übertragung der Kraft von einer linearen in eine rotatorische Bewegung greifen über einen zwischengeschalteten Freilauf an einer Welle 34 an, die an den Generator 10 koppelt. Da die aus zwei Hälften bestehenden Auffangbehälter 35 und 36 jeweils zeitversetzt mit Druckluft gefüllt werden, befinden sich diese jeweils in gegengleichen Bewegungsrichtungen, weshalb die Welle 34 jeweils abwechselnd, aber im Wesentlichen immer kontinuierlich von einem der Auffangbehälter 35 oder 36 angetrieben wird. Die Führungsräder 37 und 38 des Auffangbehälters 35 werden entlang einer Führungsschiene 41 bewegt. Die Führungsräder 39 und 40 werden entlang eines T- bzw. L-Profils 42, 43 bewegt.

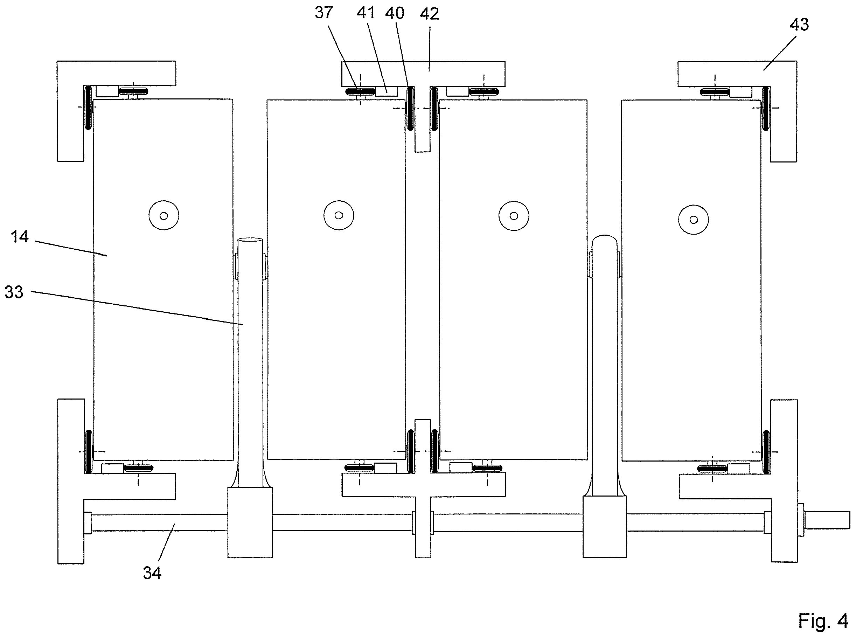

Fig. 4 zeigt eine Draufsicht auf die Ausbildung gemäß Fig. 3. Die Detailausführung der Führungsmittel 37, 38 und 39, 40 ist für jeden einzelnen Auffangbehälter dargestellt.

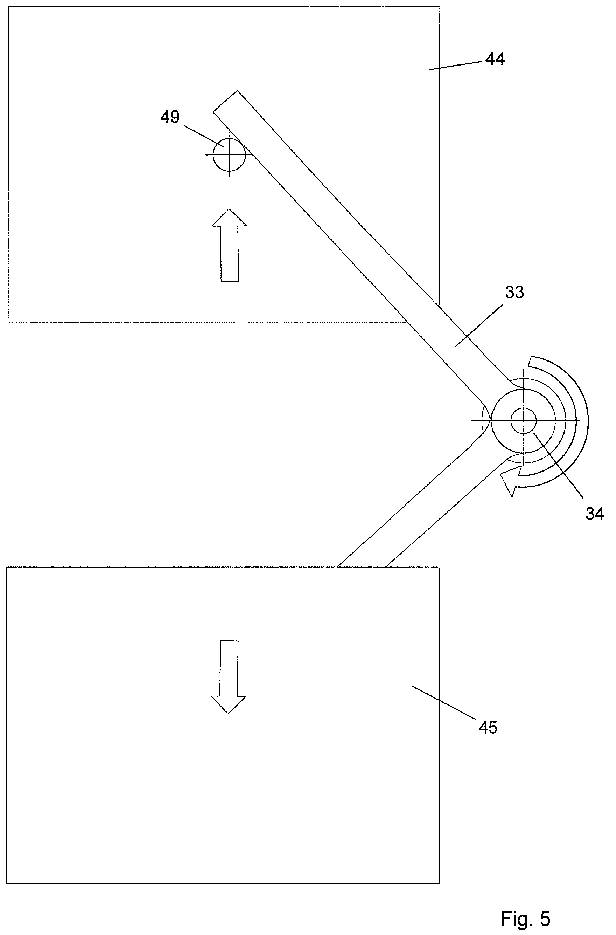

Fig. 5 zeigt eine Detailansicht der Kraftübertragungsmittel in zwei verschieden Positionen. Die aufgestiegene Position des Auffangbehälters ist mit 44 bezeichnet, die abgesunkene Position des Auffangbehälters ist mit 45 bezeichnet. Im Zuge der Aufwärtsbewegung des Auffangbehälters in die aufgestiegene Position wird die Welle 34 durch die an einem Zapfen 49 angreifende Kurbel 33 um ca. eine Vierteldrehung bewegt. Bei der Abwärtsbewegung des Auffangbehälters erfolgt auf Grund des zwischengeschalteten Leerlaufs keine Kraftübertragung auf die Welle 34.

Durch die Antriebseinrichtung 9 ist der Vorteil erhalten, dass mit der Antriebseinrichtung 8 Druckluft zu beliebigen Zeiten in Strom gewandelt werden kann. Die Konstruktion der Antriebseinrichtung 9 ist einfach und relativ wartungsfrei. Zur Stromerzeugung in einem Wohnhaus könnte beispielsweise auf dem Dach 2 eine Windkraftturbine 1 vorgesehen sein, mit der die Pumpe 3 zum Erzeugen von Druckluft angetrieben wird. Die Druckluft könnte entweder unmittelbar zum Antrieb der Antriebseinrichtung 9 verwendet werden oder in einem Druckluftspeicher 5 am Dach 2 des Hauses zwischen gespeichert werden. Dann, wenn in dem Haus Strom benötigt wird, könnte mit der gespeicherten Druckluft die Antriebseinrichtung 9 angetrieben und mit dem Generator 10 Strom erzeugt werden. Hierdurch ist eine autarke Energieerzeugungseinrichtung für ein Haus oder Hausanlagen geschaffen.

Die Antriebseinrichtung 9 könnte in einem mit Wasser gefüllten Schacht des Hauses über die gesamte Höhe des Hauses vorgesehen sein. Durch die hohe Auftauchhöhe der Auffangbehälter könnte mit nur einem Auftauchvorgang eine Vielzahl an Umdrehungen der Antriebswelle 34 durchgeführt werden, wozu die Kraftübertragungsmittel eine Mehrzahl von Kurbeln aufweisen müssten. Es könnten auch andere gasförmige Medien als Luft und andere flüssige Medien als Wasser zum Einsatz kommen. Weiters könnten die einzelnen Auffangbehälter große oder kleine Auffangvolumina aufweisen und es könnte praktisch eine beliebig große Anzahl an Auffangbehältern mit zugeordneten Führungsmitteln und Kraftübertragungsmitteln vorgesehen sein. Hierdurch kann die Antriebseinrichtung an die jeweiligen Energieerzeugungsbedürfnisse angepasst werden.

## Patentansprüche

1. Antriebseinrichtung zum Antreiben eines Generators (10), umfassend zumindest einen Auffangbehälter (14) zum Auffangen eines gasförmigen Mediums in einem flüssigen Medium (46), wobei der Auffangbehälter (14) durch den archimedischen Auftrieb angetrieben entlang Führungsmitteln in dem flüssigen Medium von einer abgesenkten Position (45) in eine aufgestiegene Position (44) linear verschiebbar angeordnet ist, und Kraftübertragungsmittel (33), die zum Übertragen der linearen Bewegung des Auffangbehälters (14) entlang der Führungsmittel in eine rotatorische Bewegung einer Antriebswelle (34) zum Antreiben des Generators (10) ausgebildet sind, wobei erste Haltemittel vorgesehen sind, die zum Halten des Auffangbehälters (14) in seiner abgesenkten Position (45) mit einer Haltekraft ausgebildet sind, und wobei Füllmittel vorgesehen sind, die zum Füllen des in seiner abgesenkten Position (45) befindlichen Auffangbehälters (14) mit dem gasförmigen Medium ausgebildet sind, wobei der Auffangbehälter (14), wenn die Haltekraft geringer als der archimedischen Auftrieb ist, von seiner abgesenkten (45) in seine aufgestiegene Position (44) übergeht, und wobei Ablassmittel vorgesehen sind, die zum Ablassen des gasförmigen Mediums aus dem in seiner aufgestiegenen Position (44) befindlichen Auffangbehälter (14) vorgesehen sind, worauf der Auffangbehälter (14) von seiner aufgestiegenen (44) in seine abgesenkte Position (45) übergeht, **dadurch gekennzeichnet, dass** die Führungsmittel wenigstens ein den Auffangbehälter (14) durchsetzendes Rohr (23) umfassen, welches mit einer Quelle des gasförmigen Mediums (12) und/oder einer Ablassleitung (13) für das gasförmige Medium verbindbar ist, und dass die Füllmittel und/oder die Ablassmittel wenigstens eine in dem Rohr (23) ausgebildete, in den Auffangbehälter (14) in der abgesenkten Position (45) mündende Öffnung (26) bzw. wenigstens eine in dem Rohr (23) ausgebildete, in den Auffangbehälter (14) in der aufgestiegenen Position (44) mündende Öffnung (30) umfasst.

2. Antriebseinrichtung nach Anspruch 1, **dadurch gekennzeichnet, dass** die Öffnung (26,30) jeweils von einer in Verschieberichtung (47) des Auffangbehälters (14) verstellbaren Abdeckung (24,29) übergriffen ist, die mit einem am Auffangbehälter (14) ausgebildeten Anschlag (50) zusammenwirkt, um bei Erreichen der abgesenkten Position (45) bzw. bei Erreichen der aufgestiegenen Position (44) die jeweilige Öffnung (26, 30) freizugeben.

3. Antriebseinrichtung nach Anspruch 2, **dadurch gekennzeichnet, dass** die Abdeckung (24,29) von einer das Rohr (23) dichtend umgebenden Hülse gebildet ist.

4. Antriebseinrichtung nach Anspruch 1, 2 oder 3, **dadurch gekennzeichnet, dass** die ersten Haltemittel wenigstens einen Permanentmagneten (19,20) umfassen.

5. Antriebseinrichtung nach einem der Ansprüche 1 bis 4, **dadurch gekennzeichnet, dass** der Auffangbehälter (14) von einer unten offenen Kammer gebildet ist.

6. Antriebseinrichtung nach Anspruch 5, **dadurch gekennzeichnet, dass** die ersten Haltemittel wenigstens einen ersten Permanentmagneten (19,20) im Gehäuse (11) und wenigstens ein metallisches Gegenstück (21,22) oder einen zweiten Permanentmagneten am Auffangbehälter (14) umfassen, wobei die Haltekraft durch die magnetische Kraft dieser Permanentmagnete (19,20) bestimmt ist.

7. Antriebseinrichtung nach einem der Ansprüche 1 bis 6, **dadurch gekennzeichnet, dass** zweite Haltemittel vorgesehen sind, die zum Halten des Auffangbehälters (14) in seiner aufgestiegenen Position (44) ausgebildet sind.

8. Antriebseinrichtung nach Anspruch 7, **dadurch gekennzeichnet, dass** die zweiten Haltemittel wenigstens einen Elektromagneten (31,32) umfassen, der mit einem metallischen Gegenstück (21,22) am Auffangbehälter (14) zusammenwirkt.

9. Antriebseinrichtung nach einem der Ansprüche 1 bis 8, **dadurch gekennzeichnet, dass** die Kraftübertragungsmittel (33) durch eine Kurbel gebildet sind, die einerseits unter Zwischenschaltung eines Freilaufs an der Welle (34) angreift und andererseits in Verschieberichtung (47) des Auffangbehälters (14) mit diesem zusammenwirkt.

10. Antriebseinrichtung nach einem der Ansprüche 1 bis 9, **dadurch gekennzeichnet, dass** die Füllmittel eine Pumpe (3) zum Erzeugen von Druckluft aufweisen.

11. Antriebseinrichtung nach einem der Ansprüche 1 bis 10, **dadurch gekennzeichnet, dass** die Antriebseinrichtung (9) wenigstens zwei Antriebsmodule aufweist, die je durch einen Auffangbehälter (35,36), Führungsmittel, erste Haltemittel, Füllmittel, Ablassmittel und Kraftübertragungsmittel (33) von dem Auffangbehälter (35,36) des Antriebsmoduls auf die Antriebswelle (34) der Antriebseinrichtung (9) gebildet sind.

12. Antriebseinrichtung nach Anspruch 11, **dadurch gekennzeichnet, dass** die zwei Antriebsmodule ausgebildet sind, um abwechselnd eine Aufwärtsbewegung durchzuführen.

13. Windkraftgenerator zum Erzeugen von Strom aus Windkraft, **dadurch gekennzeichnet, dass** eine Windkraftturbine zum mechanischen Antreiben einer Pumpen-Antriebswelle einer Pumpe (3) zum Erzeugen von Druckluft ausgebildet ist, und dass die Druckluft der Antriebseinrichtung (9) nach einem der Ansprüche 1 bis 12 zum Erzeugen von Strom zugeführt ist.

14. Windkraftgenerator nach Anspruch 13, **dadurch gekennzeichnet, dass** ein Druckluftspeicher (5) zum Speichern der von der Pumpe (3) erzeugten Druckluft vorgesehen ist, um eine Speicherung der Windenergie und zeitversetzte Stromerzeugung mit dem Generator (10) zu ermöglichen.

## Claims

1. A drive device for driving a generator (10), comprising at least one collection container (14) for collecting a gaseous medium in a liquid medium (46), wherein the collection container (14) is arranged to be linearly displaceable, driven by Archimedes' buoyancy, from a lowered position (45) to a raised position (44) along guide means in the liquid medium, and force transmission means (33) designed to transmit the linear movement of the collection container (14) along the guide means into a rotational movement of a drive shaft (34) for driving the generator (10), wherein first holding means designed to hold the collection container (14) in its lowered position (45) by a holding force are provided, and wherein filling means designed to fill the collection container (14) with the gaseous medium in its lowered position (45) are provided, wherein the collection container (14), when the holding force is smaller than Archimedes' buoyancy, changes from its lowered position (45) into its raised position (44), and wherein draining means for draining the gaseous medium from the collection container (14) in its raised position (44) are provided, whereupon the collection container (14) changes from its raised position (44) into its lowered position (45), **characterized in that** the guide means comprise at least one pipe (23) passing through the collection container (14) and connectable to a source of the gaseous medium (12) and/or a drain pipe (13) for the gaseous medium, and that the filling means and/or the draining means comprise at least one opening (26) formed in the pipe (23) and opening into the collection container (14) in the lowered position (45), and at least one opening (30) formed in the pipe (23) and opening into the collection container (14) in the raised position (44).

2. A drive device according to claim 1, **characterized in that** the opening (26,30) is respectively overlapped by a cover (24,29) adjustable in the moving direction (47) of the collection container (14) and cooperating with a stop (50) formed on the collection container (14) to release the respective opening (26, 30) when reaching the lowered position (45) or when reaching the raised position (44), respectively.

3. A drive device according to claim 2, **characterized in that** the cover (24,29) is formed by a sleeve sealingly surrounding the pipe (23).

4. A drive device according to claim 1, 2 or 3, **characterized in that** the first holding means comprise at least one permanent magnet (19,20).

5. A drive device according to any one of claims 1 to 4, **characterized in that** the collection container (14) is formed by a downwardly open chamber.

6. A drive device according to claim 5, **characterized in that** the first holding means comprise at least one first permanent magnet (19,20) in the housing (11) and at least one metallic counter-piece (21,22), or a second permanent magnet, on the collection container (14), wherein the holding force is determined by the magnetic force of the permanent magnets (19,20).

7. A drive device according to any one of claims 1 to 6, **characterized in that** second holding means designed to hold the collection container (14) in its raised position (44) are provided.

8. A drive device according to claim 7, **characterized in that** the second holding means comprise at least one electromagnet (31,32) cooperating with a metallic counter-piece (21,22) on the collection container (14).

9. A drive device according to any one of claims 1 to 8, **characterized in that** the force transmission means (33) are formed by a crank which, on the one hand, engages the shaft (34) via an interposed freewheel and, on the other hand, cooperates with the collection container (14) in the moving direction (47) thereof.

10. A drive device according to any one of claims 1 to 9, **characterized in that** the filling means comprise a pump (3) for generating compressed air.

11. A drive device according to any one of claims 1 to 10, **characterized in that** the drive device (9) comprises at least two drive modules each comprised of a collection container (35, 36), guide means, first holding means, filling means, draining means, and force transmission means (33) from the collection container (35,36) of the drive module to the drive shaft (34) of the drive device (9).

12. A drive device according to claim 11, **characterized in that** the two drive modules are designed to alternately perform an upward movement.

13. A wind power generator for generating electric power from wind power, **characterized in that** a wind power turbine is designed to mechanically drive a pump drive shaft of a pump (3) for generating compressed air, and that the compressed air is supplied to the drive device (9) according to any one of claims 1 to 12 for generating electric power.

14. A wind power generator according to claim 13, **characterized in that** a compressed-air reservoir (5) is provided for storing the compressed air generated by the pump (3) so as to enable the storage of wind energy and the time-delayed generation of electric power by the generator (10).

## Revendications

1. Dispositif d'entraînement pour entraîner un générateur (10) comprenant au moins un réceptacle collecteur (14) pour recueillir un milieu gazeux dans un milieu liquide (46), dans lequel le réceptacle collecteur (14) est agencé de manière à pouvoir effectuer un mouvement coulissant linéaire sous l'effet de la poussée d'Archimède entraînée le long de moyens de guidage dans le milieu liquide d'une position abaissée (45) à une position relevée (44), et des moyens de transmission de force (33) qui sont conçus pour convertir le déplacement linéaire du réceptacle collecteur (14) le long des moyens de guidage en un mouvement rotatif d'un arbre d'entraînement (34) afin d'entraîner le générateur (10), dans lequel il est prévu des premiers moyens de retenue qui sont conçus pour retenir le réceptacle collecteur (14) dans sa position abaissée (45) par une force de retenue, et dans lequel il est prévu des moyens de remplissage qui sont conçus pour remplir le réceptacle collecteur (14) se trouvant dans sa position abaissée (45) par le milieu gazeux, dans lequel le réceptacle collecteur (14), lorsque la force de retenue est plus faible que la poussée d'Archimède, passe de sa position abaissée (45) dans sa position relevée (44), et dans lequel il est prévu des moyens de vidage qui sont prévus pour vider le milieu gazeux du réceptacle collecteur (14) se trouvant dans sa position relevée (44), moyennant quoi le réceptacle collecteur (14) passe de sa position relevée (44) dans sa position abaissée (45), **caractérisé en ce que** les moyens de guidage comprennent au moins un tube (23) traversant le réceptacle collecteur (14), qui peut être raccordé à une source du milieu gazeux (12) et/ou à une conduite de vidage (13) pour le milieu gazeux, et les moyens de remplissage et/ou les moyens de vidage comprennent au moins une ouverture (26) formée dans le tube (23) et débouchant dans le réceptacle collecteur (14) en position abaissée (45) ou au moins une ouverture (30) formée dans le tube (23) et débouchant dans le réceptacle collecteur (14) en position relevée (44).

2. Dispositif d'entraînement selon la revendication 1, **caractérisé en ce que** l'ouverture (26,30) est recouverte respectivement par un recouvrement (24, 29) qui peut se déplacer dans le sens de coulissement (47) du réceptacle collecteur (14) et qui coopère avec une butée (50) formée sur le réceptacle collecteur (14) pour libérer l'ouverture respective (26, 30) lorsque la position abaissée (45) est atteinte ou que la position relevée (44) est atteinte.

3. Dispositif d'entraînement selon la revendication 2, **caractérisé en ce que** le recouvrement (24, 29) est formé d'une douille entourant de manière étanche le tube (23).

4. Dispositif d'entraînement selon la revendication 1, 2 ou 3, **caractérisé en ce que** les premiers moyens de retenue comprennent au moins un aimant permanent (19, 20).

5. Dispositif d'entraînement selon l'une quelconque des revendications 1 à 4, **caractérisé en ce que** le réceptacle collecteur (14) est formé par une chambre ouverte dans sa partie inférieure.

6. Dispositif d'entraînement selon la revendication 5, **caractérisé en ce que** les premiers moyens de retenue comprennent au moins un premier aimant permanent (19, 20) dans le boîtier (11) et au moins une pièce antagoniste métallique (21, 22) ou un second aimant permanent sur le réceptacle collecteur (14), dans lequel la force de retenue est déterminée par la force magnétique de cet aimant permanent (19, 20).

7. Dispositif d'entraînement selon l'une quelconque des revendications 1 à 6, **caractérisé en ce qu'**il est prévu des seconds moyens de retenue qui sont conçus pour retenir le réceptacle collecteur (14) dans sa position relevée (44).

8. Dispositif d'entraînement selon la revendication 7, **caractérisé en ce que** les seconds moyens de retenue comprennent au moins un électroaimant (31, 32) qui coopère avec une pièce antagoniste métallique (21, 22) sur le réceptacle collecteur (14).

9. Dispositif d'entraînement selon l'une quelconque des revendications 1 à 8, caractérisé en ce les moyens de transmission de force (33) sont formés par une manivelle qui s'applique d'une part par interposition d'une roue libre sur l'arbre (34) et coopère d'autre part dans la direction de déplacement (47) du réceptacle collecteur (14) avec celui-ci.

10. Dispositif d'entraînement selon l'une quelconque des revendications 1 à 9, **caractérisé en ce que** les moyens de remplissage présentent une pompe (3) pour produire de l'air comprimé.

11. Dispositif d'entraînement selon l'une quelconque des revendications 1 à 10, caractérisé en ce le dispositif d'entraînement (9) présente au moins deux modules d'entraînement qui sont formés respectivement par un réceptacle collecteur (35, 36), des moyens de guidage, des premiers moyens de retenue, des moyens de remplissage, des moyens de vidage et des moyens de transmission de force (33) du réceptacle collecteur (35, 36) du module d'entraînement sur l'arbre d'entraînement (34) du dispositif d'entraînement (9).

12. Dispositif d'entraînement selon la revendication 11, **caractérisé en ce que** les deux modules d'entraînement sont formés pour réaliser un mouvement ascendant en alternance.

13. Génératrice éolienne pour produire un courant à partir de la force du vent, **caractérisée en ce qu'**une éolienne est conçue pour entraîner mécaniquement un arbre d'entraînement d'une pompe (3) afin de produire de l'air comprimé et l'air comprimé est acheminé au dispositif d'entraînement (9) selon l'une quelconque des revendications 1 à 12 pour produire du courant.

14. Génératrice éolienne selon la revendication 13, **caractérisée en ce qu'**il est prévu un stock d'air comprimé (5) pour stocker l'air comprimé produit par la pompe (3) afin de stocker l'énergie éolienne et permettre la production de courant décalée dans le temps avec la génératrice (10).
